# EUROPÄISCHE PATENTSCHRIFT

(11) **EP 3 717 320 B1**
(45) Veröffentlichungstag und Bekanntmachung des Hinweises auf die Patenterteilung: **10.09.2025**
(21) Anmeldenummer: 18811159.5
(22) Anmeldetag: 15.11.2018
(51) Int. Cl.: B60T 17/22, B60T 13/14, B60T 7/04, B60T 8/40, B60T 13/66, B60T 13/68, B60T 13/74

(54) **BREMSANLAGE FÜR KRAFTFAHRZEUGE SOWIE VERFAHREN ZUM BETREIBEN EINER BREMSANLAGE**
BRAKE SYSTEM FOR MOTOR VEHICLES AND METHOD FOR OPERATING A BRAKE SYSTEM
SYSTEME DE FREINAGE POUR VEHICULES AUTOMOBILES ET PROCEDE DE FONCTIONNEMENT D'UN SYSTEME DE FREINAGE

(30) Priorität: 01.12.2017 DE 102017221716
(43) Veröffentlichungstag der Anmeldung: 07.10.2020
(73) Patentinhaber: Continental Automotive Technologies GmbH, 30175 Hannover (DE)
(72) Erfinder: BILLER, Harald, 65760 Eschborn (DE)
(74) Vertreter: Aumovio Corporation
(86) Internationale Anmeldenummer: PCT/EP2018/081387
(87) Internationale Veröffentlichungsnummer: WO 2019/105749

(56) Entgegenhaltungen:
- EP-A1- 3 568 327
- EP-A1- 3 568 328
- WO-A1-00/59762
- WO-A1-2008/017713
- DE-A1- 102012 219 390
- DE-A1- 102012 223 497
- DE-A1- 102014 225 958

## Beschreibung

Die Erfindung betrifft eine Bremsanlage für Kraftfahrzeuge, die einen mittels eines Bremspedals betätigbaren Hauptbremszylinder, welcher lediglich einen Druckraum umfasst, eine elektrisch steuerbare Druckbereitstellungseinrichtung, einen, insbesondere unter Atmosphärendruck stehender, Druckmittelvorratsbehälter, aus dem der Hauptbremszylinder und die Druckbereitstellungseinrichtung mit Druckmittel versorgt werden, sowie mindestens vier hydraulisch betätigbare Radbremsen umfasst, wobei die mindestens zwei Radbremsen wahlweise mittels des Hauptbremszylinders oder mittels der Druckbereitstellungseinrichtung betätigbar sind, wobei der Druckraum des Hauptbremszylinders über ein Trennventil mit einer ersten Bremskreisversorgungsleitung trennbar verbunden ist, an welche mindestens eine der Radbremsen angeschlossen ist. Die Erfindung betrifft auch Verfahren zum Betreiben der Bremsanlage.

Aus der WO 00/59762 A1 geht eine Bremsanlage hervor, in welcher zwei der vier Radbremsen von einem Hauptbremszylinder oder einer Druckbereitstellungseinrichtung betätigbar sind, während die anderen beiden Radbremsen nur von der Druckbereitstellungseinrichtung betätigbar sind.

In der DE 10 2014 225 958 A1 wird eine Bremsanlage mit zwei Druckmittelvorratsbehältern offenbart, welche jeweils eine Füllstandserfassungseinrichtung umfassen, die zur Erkennung von Leckagen dient.

Die nachveröffentlichte EP 3 568 328 A1 zeigt eine alternative, kompakte und kostengünstige Bremsanlage für eine "Brake-by-wire-Betriebsart und für eine Rückfallbetriebsart in einem Kraftfahrzeug. Dafür ist die Bremsanlage im stromlosen Fall einkreisig aufgebaut. Es kann jedoch bei Bedarf auf eine Zweikreisigkeit umgeschaltet werden, wobei jeder Kreis mittels einer der beiden Druckquellen mit Druck beaufschlagt werden kann.

Die nachveröffentlichte EP 3 568 327 A1 zeigt eine Bremsanlage für ein Kraftfahrzeug, welche einfach aufgebaut und kostengünstig ist, aber welche die für das hochautomatisierte Fahren notwendige, möglichst hohe Verfügbarkeit bietet. Bei Ausfall einer der elektrisch steuerbaren Druckbereitstellungseinrichtungen können die wichtigsten Bremsfunktionen autonom bzw. durch eine Autopilotfunktion durchgeführt werden. Hierzu sind radindividuelle und zumindest bremskreisindividuelle Drücke vorgesehen sowie das Einstellen von jeweiligen präzisen Bremsdruckverläufen inkl. Druckaufbau, Druckabbau und Druckhalten.

Aus der gattungsgemäßen DE 10 2012 219 390 A1 ist eine Bremsanlage für Kraftfahrzeuge mit einem Hauptbremszylinder, der nur einen Druckraum umfasst, bekannt, die in einer "Brake-by-wire"- Betriebsart betrieben werden kann, in der die vier Radbremsen des Kraftfahrzeugs mit Druckmittel aus einer elektrisch steuerbaren Druckbereitstellungseinrichtung betätigt werden. Die Bremsanlage kann auch in einer Rückfallbetriebsart betrieben werden, in der die vier Radbremsen mit Druckmittel aus einem Hauptzylinder betrieben werden.

In einer solchen Bremsanlage können Leckagen auftreten, die so gering sind, dass sie nicht mittels einer Volumenmessung in der Druckbereitstellungseinrichtung während des Betriebs der Bremsanlage ermittelt und lokalisiert werden können. Außerdem können Leckagen außerhalb des Betriebs der Bremsanlage (z.B. während die Zündung ausgeschaltet ist) auftreten, welche mit den üblichen Mitteln nicht ermittelt oder lokalisiert werden können.

Es ist damit Aufgabe der vorliegenden Erfindung, eine Bremsanlage sowie ein Verfahren zu deren Betrieb bereitzustellen, die so ausgelegt ist, dass eine ausreichende Bremswirkung auch im Falle solcher Leckagen sichergestellt ist.

Diese Aufgabe wird durch eine Bremsanlage gemäß Anspruch 1 und ein Verfahren gemäß Anspruch 7 gelöst.

Erfindungsgemäß werden die mindestens vier Radbremsen in mindestens eine erste Radbremsengruppe und eine zweite Radbremsengruppe eingeteilt, wobei die erste Radbremsengruppe an die erste Bremskreisversorgungsleitung angeschlossen ist. Die Druckbereitstellungseinrichtung ist mit einer zweiten Bremskreisversorgungsleitung verbunden, an welche die zweite Radbremsengruppe angeschlossen ist. Die erste Bremskreisversorgungsleitung ist über ein Verbindungsventil mit der zweiten Bremskreisversorgungsleitung trennbar verbunden. Dabei umfasst die erste Radbremsengruppe eine erste und eine zweite Radbremse der mindestens vier Radbremsen und die zweite Radbremsengruppe umfasst eine dritte und eine vierte Radbremse der mindestens vier Radbremsen.

Dies hat den Vorteil, dass die Bremsanlage in zwei Bremskreise aufgeteilt werden kann, wobei der erste Bremskreis, der die erste Bremskreisversorgungsleitung und die erste Radbremsengruppe umfasst und an den Hauptbremszylinder angeschlossen ist, durch das Verbindungsventil hydraulisch komplett von dem zweiten Bremskreis, welcher die zweite Bremskreisversorgungsleitung sowie die zweite Radbremsengruppe umfasst und an die Druckbereitstellungseinrichtung angeschlossen ist, abgetrennt werden kann. Von einer Leckage in einem der beiden Bremskreise bleibt der jeweils andere Bremskreis bei geschlossenem Verbindungsventil unberührt.

Auf diese Weise ist sichergestellt, dass eine Bremswirkung gewährleistet ist. Diese Vorgehensweise ist besonders dann von Vorteil, wenn eine Leckage außerhalb eines Zündungslaufs auftritt und daher nicht einfach lokalisiert werden konnte.

Erfindungsgemäß ist das Verbindungsventil stromlos geschlossen ausgeführt. Dies hat den Vorteil, dass die Bremsanlage in dem stromlosen Zustand, beispielsweise wenn die Zündung ausgeschaltet ist, in zwei Bremskreise aufgeteilt ist.

Vorteilhafterweise ist das Trennventil stromlos offen ausgeführt. Hierdurch wird sichergestellt, dass der Fahrer jederzeit, auch bei Ausfall der Ansteuerung der Bremsanlage, eine Bremskraft durch die erste Radbremsengruppe zumindest durch die Pedalkraft aufbauen kann.

Nach einer bevorzugten Ausführungsform der Erfindung ist die Druckbereitstellungseinrichtung direkt mit der zweiten Bremskreisversorgungsleitung verbunden. Der Begriff "direkt verbunden" bedeutet hier, dass kein elektrisch, hydraulisch oder mechanisch betätigbares Ventil zwischen der Druckbereitstellungseinrichtung und der zweiten Bremskreisversorgungsleitung angeordnet ist.

Besonders bevorzugt ist die Druckbereitstellungseinrichtung ohne Zwischenschaltung eines elektrisch, hydraulisch oder mechanisch betätigbaren Ventils mit mindestens einem Einlassventil der zweiten Radbremsengruppe verbunden, wobei das Einlassventil vorzugsweise stromlos offen ausgeführt ist.

Nach einer alternativen bevorzugten Ausführungsform der Erfindung ist die Druckbereitstellungseinrichtung über ein Zuschaltventil mit der zweiten Bremskreisversorgungsleitung verbunden. Bevorzugt ist das Zuschaltventil stromlos offen ausgeführt.

Diese Ausführungsform mit einem zusätzlichen Zuschaltventil erlaubt eine vorteilhafte Betriebsart in dem Fall, dass die Druckbereitstellungseinrichtung ausgefallen ist, die Ventile aber noch betrieben werden können. Dann werden das Trennventil und das Verbindungsventil geöffnet und das Zuschaltventil geschlossen. In dieser Ventilstellung kann der Fahrer durch die Pedalkraft eine Bremskraft an allen Radbremsen aufbauen. Das geschlossene Zuschaltventil verhindert dabei ein Entweichen von Druckmittel in die Druckbereitstellungseinrichtung.

Vorteilhafterweise sind die erste und die zweite Radbremse auf entgegengesetzten Fahrzeugseiten angeordnet. Entsprechend sind die dritte und vierte Radbremse ebenfalls auf entgegengesetzten Fahrzeugseiten angeordnet. Das bedeutet, dass die erste Radbremsengruppe Radbremsen auf beiden Fahrzeugseiten umfasst und auch die zweite Radbremsengruppe Radbremsen auf beiden Fahrzeugseiten umfasst. Dies hat den Vorteil, dass, auch bei einer Bremsung mit nur einem der Bremskreise (d.h. mit nur einer Radbremsengruppe, insb. nur mit der ersten und zweiten oder nur mit der dritten und vierten Radbremse), ein Schiefziehen des Fahrzeugs verhindert oder zumindest reduziert wird.

Bevorzugt ist das Verbindungsventil derart ausgeführt, dass es mindestens bis zu einer Druckdifferenz, die einem Vollbremsungs-Radbremsdruck entspricht, nicht überströmt wird. Dies hat den Vorteil, dass in dem Fall, in dem bei Bremskreistrennung in einem der beiden Bremskreise aufgrund einer Leckage kein Druck mehr aufgebaut werden kann, ein aufgebauter Bremsdruck in dem anderen Bremskreis nicht über das Verbindungsventil entweicht, sondern vollständig in die entsprechenden Radbremsen eingesteuert wird.

Nach einer bevorzugten Ausführungsform der Erfindung ist die Druckbereitstellungseinrichtung als Linearaktuator ausgebildet, in welchem zum Druckaufbau ein Kolben axial in einem hydraulischen Druckbereitstellungseinrichtungs-Druckraum verschoben wird, wobei der Druckbereitstellungseinrichtungs-Druckraum mit zumindest einer radialen Bohrung versehen ist, die derart angeordnet ist, dass der Druckbereitstellungseinrichtungs-Druckraum in der unbetätigten Stellung des Kolbens über die radiale Bohrung mit dem Druckmittelvorratsbehälter in Verbindung steht, wobei die Verbindung durch eine Betätigung des Kolbens abgesperrt wird.

Nach einer weiteren bevorzugten Ausführungsform der Erfindung ist die Druckbereitstellungseinrichtung als Linearaktuator ausgebildet, in welchem zum Druckaufbau ein Kolben axial in einem hydraulischen Druckbereitstellungseinrichtungs-Druckraum verschoben wird und der Druckbereitstellungseinrichtungs-Druckraum über ein Nachsaugventil mit dem Druckmittelvorratsbehälter verbunden ist, wobei das Nachsaugventil mechanisch geöffnet wird, wenn der Kolben in der unbetätigten Stellung ist. Die unbetätigte Stellung ist dabei diejenige Stellung, bei welcher kein Druckaufbau erfolgt.

Die Erfindung betrifft auch ein Verfahren zum Betreiben der Bremsanlage, wobei der Druckmittelvorratsbehälter mit einer Vorrichtung zur Bestimmung eines Pegels des Druckmittels ausgestattet ist. Die Bremsanlage wird in einer Rückfallbetriebsart betrieben, wenn der bestimmte Pegel unter einen vorgegebenen Grenzwert fällt.

Bevorzugt kann die Bremsanlage in einem Normalbetrieb betrieben werden, in welchem die Radbremsen, d.h. vorteilhafterweise sowohl die erste Radbremsengruppe als auch die zweite Radbremsengruppe, mittels der Druckbereitstellungseinrichtung betätigt werden, besonders bevorzugt indem das Verbindungsventil in den offenen Zustand geschaltet wird und das Trennventil in den geschlossenen Zustand geschaltet wird. Die Bremsanlage wird bevorzugt in dem Normalbetrieb betrieben, wenn der bestimmte Pegel über dem vorgegebenen Grenzwert liegt. Diese Betriebsart entspricht einer sogenannten "by-wire"-Betriebsart, in welcher die Radbremsen vom Bremspedal entkoppelt sind und der Bremsdruck nur durch die Druckbereitstellungseinrichtung aufgebaut wird.

Bevorzugt wird in der Rückfallbetriebsart das Verbindungsventil dauerhaft geschlossen gehalten. Hierdurch wird eine Trennung der Bremsanlage in zwei Bremskreise während der Rückfallbetriebsart bewirkt.

Besonders bevorzugt wird in der Rückfallbetriebsart die erste Radbremsengruppe mittels des Hauptbremszylinders betätigt und die zweite Radbremsengruppe wird mittels der Druckbereitstellungseinrichtung betätigt.

Besonders bevorzugt werden in der Rückfallbetriebsart die erste und die zweite Radbremse mittels des Hauptbremszylinders betätigt und die dritte und die vierte Radbremse werden mittels der Druckbereitstellungseinrichtung betätigt.

Bevorzugt wird bei Erkennen eines Ausfalls mindestens eines Ventils der Bremsanlage die Bremsanlage in der Rückfallbetriebsart betrieben. Es wird also auch in Situationen, in denen kein Druckmittelverlust festgestellt wurde, aber die Bremswirkung aufgrund eines defekten Ventils nicht in dem einkreisigen Betrieb der Bremsanlage sichergestellt werden kann, in einen Rückfallbetrieb mit Bremskreistrennung übergegangen.

Nach einer bevorzugten Ausführungsform der Erfindung sind die Radbremsen über je ein Auslassventil, besonders bevorzugt über eine gemeinsame Rücklaufleitung, mit dem Druckmittelvorratsbehälter trennbar verbunden. In der Rückfallbetriebsart werden die Auslassventile geschlossen gehalten. Hierdurch wird ein Transfer von Druckmittel zwischen den Bremskreisen verhindert.

Weitere bevorzugte Ausführungsformen der Erfindung ergeben sich aus den Unteransprüchen und der nachfolgenden Beschreibung anhand von Figuren.

Es zeigt schematisch:

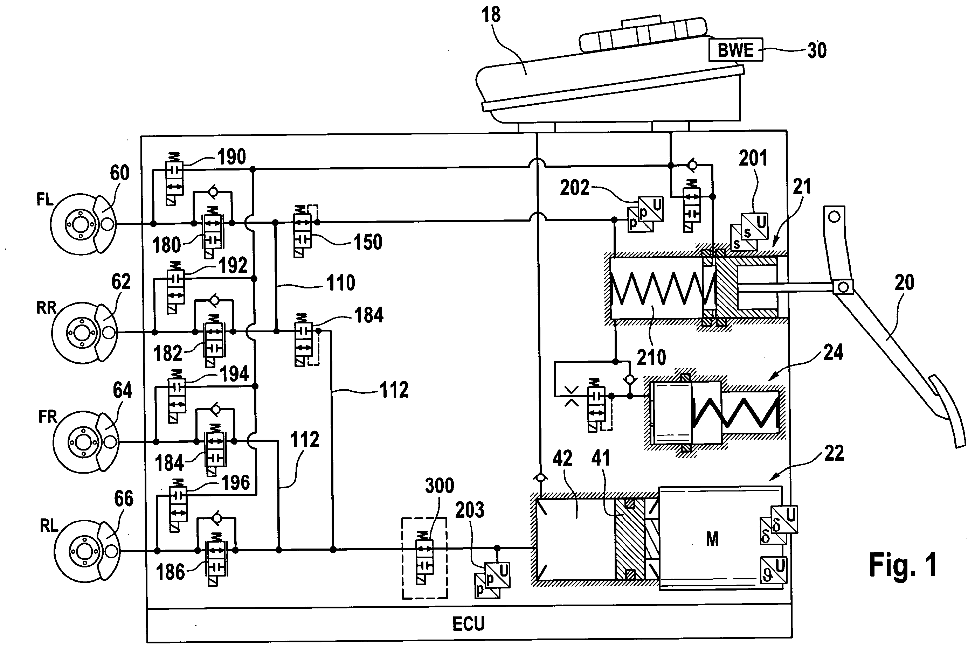

- Fig. 1: ein Ausführungsbeispiel einer erfindungsgemäßen Bremsanlage.

In Figur 1 ist ein Ausführungsbeispiel einer erfindungsgemäßen Bremsanlage für ein Kraftfahrzeug gezeigt. Die Bremsanlage umfasst einen Hauptbremszylinder 21, welcher einen einzigen Druckraum 210 umfasst. Der Hauptbremszylinder 21 wird über ein Bremspedal 20 vom Fahrer des Kraftfahrzeugs unmittelbar betätigt. Der Druckraum 210 ist an einen Druckmittelvorratsbehälter 18 angeschlossen und wird aus diesem mit Druckmittel versorgt. Der Druckraum 210 des Hauptbremszylinders 21 ist über ein Trennventil 150 mit einer ersten Bremskreisversorgungsleitung 110 trennbar verbunden. Das Trennventil 150 ist beispielsgemäß stromlos offen ausgeführt. An die erste Bremskreisversorgungsleitung 110 sind eine erste hydraulisch betätigbare Radbremse 60 und eine zweite hydraulisch betätigbare Radbremse 62 angeschlossen. Die erste Radbremse und die zweite Radbremse bilden eine erste Radbremsengruppe. Zweckmäßigerweise sind die erste und zweite Radbremse 60, 62 dabei über je ein Einlassventil 180, 182 mit der ersten Bremskreisversorgungsleitung 110 trennbar verbunden. Die Einlassventile 180, 182 sind beispielsgemäß stromlos offen ausgeführt.

Die Bremsanlage umfasst auch eine Druckbereitstellungseinrichtung 22. Die Druckbereitstellungseinrichtung 22 umfasst beispielsgemäß einen Motor M, mittels dessen ein Kolben 41 in einem hydraulischen Druckbereitstellungseinrichtungs-Druckraum 42 (DBE-Druckraum) verschoben werden kann, wodurch ein Druck aufgebaut werden kann. Die Druckbereitstellungseinrichtung 22 ist an den Druckmittelvorratsbehälter 18 angeschlossen und wird aus diesem mit Druckmittel versorgt.

Die Druckbereitstellungseinrichtung 22 ist mit einer zweiten Bremskreisversorgungsleitung 112 verbunden. An die zweite Bremskreisversorgungsleitung 112 sind eine dritte hydraulisch betätigbare Radbremse 64 und eine vierte hydraulisch betätigbare Radbremse 66 angeschlossen. Die dritte Radbremse und die vierte Radbremse bilden eine zweite Radbremsengruppe. Zweckmäßigerweise sind die dritte und vierte Radbremse 64, 66 dabei über je ein Einlassventil 184, 186 mit der zweiten Bremskreisversorgungsleitung 112 trennbar verbunden. Die Einlassventile 184, 186 sind beispielsgemäß stromlos offen ausgeführt.

Die erste und zweite Radbremse 60, 62 sind beispielsgemäß an unterschiedlichen Fahrzeugseiten angeordnet, vorteilhafterweise auf der Vorderachse oder einer Diagonalen. Dementsprechend sind die dritte und vierte Radbremse 64, 66 auch auf unterschiedlichen Fahrzeugseiten angeordnet.

Beispielsweise handelt es sich bei der ersten Radbremse 60 um die vordere linke Radbremse (FL), bei der zweiten Radbremse 62 um die hintere rechte (RR) Radbremse, bei der dritten Radbremse 64 um die vordere rechte Radbremse (FR), und bei der vierten Radbremse 60 um die hintere linke Radbremse (RL). Andere Anordnungen sind ebenfalls möglich.

Nach einem Ausführungsbeispiel der Erfindung ist die Druckbereitstellungseinrichtung 22 direkt mit der zweiten Bremskreisversorgungsleitung 112 verbunden, das heißt, dass die Bremskreisversorgungsleitung 112 ohne Zwischenschaltung eines weiteren elektrisch, hydraulisch oder mechanisch betätigbaren Ventils den DBE-Druckraum 42 mit den Einlassventilen 194, 196 der dritten und vierten Radbremse 64, 66 hydraulisch verbindet.

In einem alternativen Ausführungsbeispiel der Erfindung ist die Druckbereitstellungseinrichtung 22 über ein Zuschaltventil 300 mit der zweiten Bremskreisversorgungsleitung 112 trennbar verbunden. Das Zuschaltventil ist vorzugsweise stromlos offen ausgeführt. Das optionale Zuschaltventil 300 ist in Fig. 1 in einem gestricheltem Kasten dargestellt.

Die erste Bremskreisversorgungsleitung 110 ist über ein Verbindungsventil 184 mit der zweiten Bremskreisversorgungsleitung 112 trennbar verbunden, d.h. zwischen der ersten Bremskreisversorgungsleitung 110 und der zweiten Bremskreisversorgungsleitung 112 ist das Verbindungsventil 184 angeordnet. Das Verbindungsventil 184 ist beispielsgemäß stromlos geschlossen ausgeführt.

Bevorzugt sind die Radbremsen 60, 62, 64, 66 über Auslassventile 190, 192, 194, 196, mit einer gemeinsamen Rücklaufleitung und darüber mit dem Druckmittelvorratsbehälter 18 verbunden.

Beispielsgemäß ist der Druckmittelvorratsbehälter 18 mit einer Vorrichtung 30 zur Bestimmung eines Pegels p des Druckmittels ausgestattet. Durch die Vorrichtung 30 kann beispielsgemäß festgestellt werden, wenn der Pegel p unter einen vorgegebenen Grenzwert s₁ fällt. Ein Abfallen des Pegels unter den Grenzwert s₁ deutet darauf hin, das eine Leckage innerhalb der Bremsanlage aufgetreten ist, die einen Druckmittelverlust verursacht hat.

In einem Ausführungsbeispiel der Erfindung umfasst der Druckmittelvorratsbehälter 18 zwei Kammern (nicht dargestellt), welche beispielsweise durch Schottwände abgetrennt sind. Der Hauptbremszylinder 21 ist an eine erste der Kammern angeschlossen, die Druckbereitstellungseinrichtung 22 an eine zweite der Kammern. Hierdurch ist ein separater Vorrat an Druckmittel für jeden der beiden Bremskreise in der Rückfallbetriebsart sicher gestellt.

Beispielsgemäß sind das Trennventil 150 stromlos offen, das Verbindungsventil 184 stromlos geschlossen, die Einlassventile 180, 182, 184, 186 stromlos offen und die Auslassventile 190, 192, 194, 196 stromlos geschlossen ausgeführt. In dem stromlosen Zustand der Bremsanlage ist somit die Trennung in zwei Bremskreise wie oben beschrieben gegeben. Im Falle einer Leckage bei ausgeschalteter Zündung ist der Druckmittelverlust auf einen Bremskreis begrenzt.

Beispielsgemäß ist das Verbindungsventil 184 derart ausgeführt, dass es mindestens bis zu einer Druckdifferenz, die einem Vollbremsungs-Radbremsdruck entspricht, nicht überströmt wird.

Beispielhaft ist die Druckbereitstellungseinrichtung 22 als Linearaktuator ausgebildet, in welchem zum Druckaufbau der Kolben 41 axial in den hydraulischen DBE-Druckraum 42 verschoben wird.

Nach einem Ausführungsbeispiel der Erfindung ist der DBE-Druckraum 42 mit zumindest einer radialen Bohrung versehen, die derart angeordnet ist, dass der DBE-Druckraum 42 in der unbetätigten Stellung des Kolbens 41 über die radiale Bohrung mit dem Druckmittelvorratsbehälter 18 in Verbindung steht, wobei die Verbindung durch eine Betätigung des Kolbens 41 abgesperrt wird. Die unbetätigte Stellung des Kolbens bezeichnet die Stellung des Kolbens, in der kein Druck durch die Druckbereitstellungseinrichtung 22 aufgebaut wird.

Nach einem weiteren Ausführungsbeispiel der Erfindung ist der DBE-Druckraum 42 über ein Nachsaugventil mit dem Druckmittelvorratsbehälter 18 verbunden, wobei das Nachsaugventil mechanisch geöffnet wird, wenn der Kolben 41 in der unbetätigten Stellung ist.

Die Bremsanlage kann beispielsgemäß in einem Normalbetrieb betrieben werden, der einem sog. "by-wire"-Betrieb entspricht. In dem Normalbetrieb wird beispielsgemäß der Hauptbremszylinder 21 durch Schließen des Trennventils 150 von der ersten Bremskreisversorgungsleitung 110 abgetrennt. Das Verbindungsventil 184 wird geöffnet, so dass die erste Bremskreisversorgungsleitung 110 und die zweite Bremskreisversorgungsleitung 112 hydraulisch verbunden sind. Betätigt der Fahrer das Bremspedal 20, so wird die Betätigung erfasst und das verschobene Druckmittel von einer Simulationseinrichtung 24 aufgenommen, welche nach an sich bekannten Methoden ein gewünschtes Pedalgefühl bereitstellt. Anhand der erfassten Betätigung wird ein von der Druckbereitstellungseinrichtung 22 bereitzustellender Druck bestimmt. Dieser Druck wird durch entsprechende Ansteuerung der Druckbereitstellungseinrichtung 22 eingestellt und über die Bremskreisversorgungsleitungen 112 und 110 in die erste, zweite, dritte und vierte Radbremse 60, 62, 64, 66 eingesteuert.

Ein Druckaufbau durch die Druckbereitstellungseinrichtung 22 kann in dem Normalbetrieb auch unabhängig von einer Betätigung des Bremspedals 20 durchgeführt werden.

Bremsdruck kann durch Öffnen der Auslassventile 190, 192, 194, 196 in den Radbremsen abgebaut werden. Die Einlassventile 180, 182, 184, 186 und Auslassventile 190, 192, 194, 196 sind einzeln schaltbar zum Einstellen unterschiedlicher Drücke in den Radbremsen. Es können mit der Bremsanlage an sich bekannte Brems-Regelfunktionen durchgeführt werden (bspw. EBV, ABS, ASR, ESC, ACC, etc.).

Beispielsgemäß wird die Bremsanlage in einer Rückfallbetriebsart betrieben, wenn der Pegel p unter den vorgegebenen Grenzwert s₁ fällt. In der Rückfallbetriebsart wird vorzugsweise das Verbindungsventil 184 geschlossen. Hierdurch wird effektiv eine Trennung der Bremsanlage in zwei separate Bremskreise bewirkt.

Der erste Bremskreis umfasst dabei die erste und zweite Radbremse 60, 62 und die erste Bremskreisversorgungsleitung 110. Der erste Bremskreis ist über das Trennventil 150 an den Hauptbremszylinder 21 angeschlossen. Zweckmäßigerweise wird das Trennventil 150 geöffnet bzw. bleibt in seinem geöffneten Zustand, so dass Druck in der ersten und zweiten Radbremse 60, 62 über den Hauptbremszylinder 21 bereitgestellt werden kann. Die erste und zweite Radbremse 60, 62 werden mittels des Hauptbremszylinders 21 betätigt.

Der zweite Bremskreis umfasst die dritte und vierte Radbremse 64, 66 und die zweite Bremskreisversorgungsleitung 112. Der zweite Bremskreis ist an die Druckbereitstellungseinrichtung 22 angeschlossen und Druck in diesem Bremskreis wird in der Rückfallbetriebsart über die Druckbereitstellungseinrichtung 22 bereitgestellt. Die dritte und vierte Radbremse 64, 66 werden mittels der Druckbereitstellungseinrichtung 22 betätigt.

In der Rückfallbetriebsart werden beispielsgemäß die Auslassventile 190, 192, 194, 196 der Radbremsen geschlossen gehalten, so dass ein Verschieben von Druckmittel zwischen den Kammern des Druckmittelvorratsbehälters 18 und somit zwischen den Bremskreisen unterbunden wird. Regelfunktionen, welche ein Öffnen der Auslassventile veranlassen, werden beispielsgemäß abgeschaltet.

Auch im Falle eines Erkennens eines Ausfalls eines der Ventile wird die Bremsanlage beispielsgemäß in der Rückfallbetriebsart betrieben.

Nachfolgend wird eine weitere beispielsgemäße Ausführungsform der Erfindung beschrieben.

In dem stromlosen Zustand der Bremsanlage wird eine permanente Trennung von zwei Bremskreisen in der Bremsanlage hergestellt und ein Bremskreis aus dem Hauptbremszylinder 21, der andere Bremskreis aus der Druckbereitstellungseinrichtung 22 mit Druck versorgt. In dem vorliegenden Schaltplan der Figur 1 ist einer der Bremskreise (hier die Räder FL und RR) über das stromlos offene Trennventil 150 mit dem Hauptbremszylinder 21 und über das stromlos geschlossene Verbindungsventil 184 (Druckzuschaltventil) mit der Druckbereitstellungseinrichtung 22 verbunden. Der andere Bremskreis (hier FR und RL) ist direkt mit der Druckbereitstellungseinrichtung 22 verbunden. Nach einem Ansprechen der Vorrichtung zur Bestimmung eines Pegels 30 (z.B. Behälterwarneinrichtung) werden alle Ventile (beispielsgemäß mindestens Trennventil 150 und Verbindungsventil 184, bevorzugt auch andere Ventile der Bremsanlage) entstromt. Die beiden Bremskreise werden durch ihre jeweiligen Druckquellen (Hauptbremszylinder 21 und Druckbereitstellungseinrichtung 22) versorgt. Diese Rückfallbetriebsart kann auch verwendet werden, falls alle Ventile ausfallen, die Sensoren (insb. Drucksensoren 202, 203 und Pedalwegsensor 201) und die Druckbereitstellungseinrichtung 22 aber noch verfügbar sind. Darin besteht ein weiterer Vorteil der Erfindung. In der stromlosen Rückfallebene werden nur zwei Radbremsen mit Druck versorgt.

Man beachte, dass das Verbindungsventil 184 so modifiziert ist, dass es gegen hinreichend große Druckdifferenzen geschlossen bleibt. Zum Druckausgleich in dem Bremskreis der Druckbereitstellungseinrichtung 22 sollte die Druckbereitstellungseinrichtung 22 mit einem Schnüffelloch versehen werden. Alternativ könnte der Linearaktuator 22 im löseseitigen Anschlag ein Nachsaugventil über eine mechanische Verbindung öffnen.

## Patentansprüche

1. Bremsanlage für Kraftfahrzeuge, die einen mittels eines Bremspedals (20) betätigbaren Hauptbremszylinder (21), welcher lediglich einen Druckraum (210) umfasst, eine elektrisch steuerbare Druckbereitstellungseinrichtung (22), einen, insbesondere unter Atmosphärendruck stehender, Druckmittelvorratsbehälter (18), aus dem der Hauptbremszylinder (21) und die Druckbereitstellungseinrichtung (22) mit Druckmittel versorgt werden, sowie mindestens vier hydraulisch betätigbare Radbremsen (60, 62, 64, 66) umfasst, wobei die Radbremsen (60, 62, 64, 66) wahlweise mittels des Hauptbremszylinders (21) oder mittels der Druckbereitstellungseinrichtung (22) betätigbar sind, wobei der Druckraum (210) des Hauptbremszylinders über ein Trennventil (150) mit einer ersten Bremskreisversorgungsleitung (110) trennbar verbunden ist, an welche mindestens eine der Radbremsen (60, 62) angeschlossen ist, **dadurch gekennzeichnet, dass** die Radbremsen (60, 62, 64, 66) in mindestens eine erste Radbremsengruppe und eine zweite Radbremsengruppe eingeteilt werden, wobei die erste Radbremsengruppe eine erste und eine zweite Radbremse (60, 62) umfasst und die zweite Radbremsengruppe ein dritte und vierte Radbremse (64, 66) umfasst, wobei die erste Radbremsengruppe an die erste Bremskreisversorgungsleitung (110) angeschlossen ist, und dass die Druckbereitstellungseinrichtung (22) mit einer zweiten Bremskreisversorgungsleitung (112) verbunden ist, an welche die zweite Radbremsengruppe (64, 66) angeschlossen ist, wobei die erste Bremskreisversorgungsleitung (110) über ein Verbindungsventil (184) mit der zweiten Bremskreisversorgungsleitung (112) trennbar verbunden ist, wobei das Verbindungsventil (184) stromlos geschlossen ausgeführt ist.

2. Bremsanlage nach Anspruch 1, **dadurch gekennzeichnet, dass** die erste und die zweite Radbremse (60, 62) auf entgegengesetzten Fahrzeugseiten angeordnet sind.

3. Bremsanlage nach Anspruch 1 oder 2, **dadurch gekennzeichnet, dass** das Trennventil (150) stromlos offen ausgeführt ist.

4. Bremsanlage nach einem der Ansprüche 1 bis 3, **dadurch gekennzeichnet, dass** die Druckbereitstellungseinrichtung (22) direkt mit der zweiten Bremskreisversorgungsleitung (112) verbunden ist.

5. Bremsanlage nach einem der Ansprüche 1 bis 3, **dadurch gekennzeichnet, dass** die Druckbereitstellungseinrichtung (22) über ein, insbesondere stromlos offenes, Zuschaltventil (300) mit der zweiten Bremskreisversorgungsleitung (112) verbunden ist.

6. Bremsanlage nach einem der vorhergehenden Ansprüche,
**dadurch gekennzeichnet, dass** das Verbindungsventil (184) derart ausgeführt ist, dass es mindestens bis zu einer Druckdifferenz, die einem Vollbremsungs-Radbremsdruck entspricht, nicht überströmt wird.

7. Verfahren zum Betreiben einer Bremsanlage nach einem der vorhergehenden Ansprüche, **dadurch gekennzeichnet, dass** der Druckmittelvorratsbehälter (18) mit einer Vorrichtung (30) zur Bestimmung eines Pegels (p) des Druckmittels ausgestattet ist, und dass die Bremsanlage in einer Rückfallbetriebsart betrieben wird, wenn der bestimmte Pegel (p) unter einen vorgegebenen Grenzwert (s₁) fällt.

8. Verfahren nach Anspruch 7, **dadurch gekennzeichnet, dass** die Bremsanlage in einem Normalbetrieb betrieben werden kann, in welchem die erste Radbremsengruppe und die zweite Radbremsengruppe(60, 62, 64, 66) mittels der Druckbereitstellungseinrichtung (22) betätigt werden, insbesondere indem das Verbindungsventil (184) in den offenen Zustand geschaltet wird und das Trennventil (150) in den geschlossenen Zustand geschaltet wird, und dass die Bremsanlage in dem Normalbetrieb betrieben wird, wenn der bestimmte Pegel (p) über dem vorgegebenen Grenzwert (s₁) liegt.

9. Verfahren nach Anspruch 7 oder 8, **dadurch gekennzeichnet, dass** in der Rückfallbetriebsart das Verbindungsventil (184) dauerhaft geschlossen gehalten wird.

10. Verfahren nach einem der Ansprüche 7 bis 9, **dadurch gekennzeichnet, dass** in der Rückfallbetriebsart die erste Radbremsengruppe (60, 62) mittels des Hauptbremszylinders (21) betätigt wird und die zweite Radbremsengruppe (64, 66) mittels der Druckbereitstellungseinrichtung (22) betätigt wird.

11. Verfahren nach einem Ansprüche 7 bis 10, **dadurch gekennzeichnet, dass** bei Erkennen eines Ausfalls mindestens eines Ventils der Bremsanlage die Bremsanlage in der Rückfallbetriebsart betrieben wird.

12. Verfahren nach einem Ansprüche 7 bis 11, **dadurch gekennzeichnet, dass** die Radbremsen (60, 62, 64, 66) über je ein Auslassventil (190, 192, 194, 196), insbesondere über eine gemeinsame Rücklaufleitung, mit dem Druckmittelvorratsbehälter (18) trennbar verbunden sind und in der Rückfallbetriebsart die Auslassventile geschlossen gehalten werden.

## Claims

1. Brake system for motor vehicles which comprises a master brake cylinder (21) which can be actuated by means of a brake pedal (20) and comprises only one pressure chamber (210); an electrically controllable pressure supply device (22); a pressure medium reservoir (18) which is, in particular, under atmospheric pressure and from which the master brake cylinder (21) and the pressure supply device (22) are supplied with pressure medium; and at least four hydraulically actuable wheel brakes (60, 62, 64, 66), wherein the wheel brakes (60, 62, 64, 66) can optionally be actuated by means of the master brake cylinder (21) or by means of the pressure supply device (22); wherein the pressure chamber (210) of the master brake cylinder is separably connected via an isolating valve (150) to a first brake circuit supply line (110), to which at least one of the wheel brakes (60, 62) is connected, **characterized in that** the wheel brakes (60, 62, 64, 66) are divided into at least a first wheel brake group and a second wheel brake group, wherein the first wheel brake group comprises a first and a second wheel brake (60, 62), and the second wheel brake group comprises a third and fourth wheel brake (64, 66), wherein the first wheel brake group is connected to the first brake circuit supply line (110), and **in that** the pressure supply device (22) is connected to a second brake circuit supply line (112), to which the second wheel brake group (64, 66) is connected, wherein the first brake circuit supply line (110) is separably connected via a connecting valve (184) to the second brake circuit supply line (112), wherein the connecting valve (184) is of normally closed design.

2. Brake system according to Claim 1, **characterized in that** the first and the second wheel brake (60, 62) are arranged on opposite sides of the vehicle.

3. Brake system according to Claim 1 or 2, **characterized in that** the isolating valve (150) is of normally open design.

4. Brake system according to one of Claims 1 to 3, **characterized in that** the pressure supply device (22) is directly connected to the second brake circuit supply line (112).

5. Brake system according to one of Claims 1 to 3, **characterized in that** the pressure supply device (22) is connected to the second brake circuit supply line (112) via a sequence valve (300) which is, in particular, normally open.

6. Brake system according to one of the preceding claims, **characterized in that** the connecting valve (184) is configured such that it is not opened at least up to a pressure difference which corresponds to a wheel brake pressure for full braking.

7. Method for operating a brake system according to one of the preceding claims, **characterized in that** the pressure medium reservoir (18) is equipped with a device (30) for determining a level (p) of the pressure medium, and **in that** the brake system is operated in a fallback operating mode if the determined level (p) falls below a predefined threshold value (s₁).

8. Method according to Claim 7, **characterized in that** the brake system can be operated in a normal operating mode, in which the first wheel brake group and the second wheel brake group (60, 62, 64, 66) are actuated by means of the pressure supply device (22), in particular by the connecting valve (184) being switched into the open state and the isolating valve (150) being switched into the closed state, and **in that** the brake system is operated in the normal operating mode when the determined level (p) lies above the predefined threshold value (s₁).

9. Method according to Claim 7 or 8, **characterized in that**, in the fallback operating mode, the connecting valve (184) is held permanently closed.

10. Method according to one of Claims 7 to 9, **characterized in that**, in the fallback operating mode, the first wheel brake group (60, 62) is actuated by means of the master brake cylinder (21), and the second wheel brake group (64, 66) is actuated by means of the pressure supply device (22).

11. Method according to one of Claims 7 to 10, **characterized in that**, when failure of at least one valve of the brake system is detected, the brake system is operated in the fallback operating mode.

12. Method according to one of Claims 7 to 11, **characterized in that** the wheel brakes (60, 62, 64, 66) are separably connected to the pressure medium reservoir (18) via a respective outlet valve (190, 192, 194, 196), in particular via a common return line, and the outlet valves are held closed in the fallback operating mode.

## Revendications

1. Système de freinage pour véhicules automobiles, comprenant un maître-cylindre (21) actionnable au moyen d'une pédale de frein (20), lequel comprend uniquement une chambre de pression (210), un dispositif de fourniture de pression (22) à commande électrique, un réservoir de fluide sous pression (18), en particulier sous la pression atmosphérique, à partir duquel le maître-cylindre (21) et le dispositif de fourniture de pression (22) sont alimentés en fluide sous pression, ainsi qu'au moins quatre freins de roue (60, 62, 64, 66) actionnables hydrauliquement, les freins de roue (60, 62, 64, 66) pouvant être actionnés au choix au moyen du maître-cylindre (21) ou au moyen du dispositif de fourniture de pression (22), la chambre de pression (210) du maître-cylindre étant reliée de manière séparable, par le biais d'une vanne de séparation (150), à une première conduite d'alimentation de circuit de freinage (110) à laquelle est raccordé au moins l'un des freins de roue (60, 62), **caractérisé en ce que** les freins de roue (60, 62, 64, 66) sont répartis en au moins un premier groupe de freins de roue et un deuxième groupe de freins de roue, le premier groupe de freins de roue comportant un premier et un deuxième frein de roue (60, 62) et le deuxième groupe de freins de roue comportant un troisième et un quatrième frein de roue (64, 66), le premier groupe de freins de roue étant raccordé à la première conduite d'alimentation de circuit de freinage (110), et **en ce que** le dispositif de fourniture de pression (22) est relié à une deuxième conduite d'alimentation de circuit de freinage (112) à laquelle est raccordé le deuxième groupe de freins de roue (64, 66), la première conduite d'alimentation du circuit de freinage (110) étant reliée de manière séparable à la deuxième conduite d'alimentation du circuit de freinage (112) par le biais d'une vanne de liaison (184), la vanne de liaison (184) étant réalisée de manière à être fermée au repos.

2. Système de freinage selon la revendication 1, **caractérisé en ce que** les premier et deuxième freins de roue (60, 62) sont disposés sur des côtés opposés du véhicule.

3. Système de freinage selon la revendication 1 ou 2, **caractérisé en ce que** la vanne de séparation (150) est réalisée de manière à être ouverte au repos.

4. Système de freinage selon l'une des revendications 1 à 3, **caractérisé en ce que** le dispositif de fourniture de pression (22) est relié directement à la deuxième conduite d'alimentation du circuit de freinage (112).

5. Système de freinage selon l'une des revendications 1 à 3, **caractérisé en ce que** le dispositif de fourniture de pression (22) est relié à la deuxième conduite d'alimentation du circuit de freinage (112) par le biais d'une vanne de séquence (300), notamment ouverte au repos.

6. Système de freinage selon l'une des revendications précédentes, **caractérisé en ce que** la vanne de liaison (184) est réalisée de telle sorte qu'elle ne s'ouvre pas au moins jusqu'à une différence de pression qui correspond à une pression de frein de roue de freinage d'urgence.

7. Procédé pour faire fonctionner un système de freinage selon l'une des revendications précédentes, **caractérisé en ce que** le réservoir de fluide sous pression (18) est équipé d'un arrangement (30) destiné à déterminer un niveau (p) du fluide sous pression, et **en ce que** le système de freinage est utilisé dans un mode de fonctionnement de secours lorsque le niveau (p) déterminé chute en dessous d'une valeur limite (s₁) prédéfinie.

8. Procédé selon la revendication 7, **caractérisé en ce que** le système de freinage peut fonctionner dans un mode normal, dans lequel le premier groupe de freins de roue et le deuxième groupe de freins de roue (60, 62, 64, 66) sont actionnés au moyen du dispositif de fourniture de pression (22), en particulier en commutant la vanne de liaison (184) à l'état ouvert et la vanne de séparation (150) à l'état fermé, et **en ce que** le système de freinage fonctionne dans le mode normal lorsque le niveau (p) déterminé est supérieur à la valeur limite (s₁) prédéfinie.

9. Procédé selon la revendication 7 ou 8, **caractérisé en ce que**, dans le mode de fonctionnement de secours, la vanne de liaison (184) est maintenue fermée en permanence.

10. Procédé selon l'une des revendications 7 à 9, **caractérisé en ce que**, dans le mode de fonctionnement de secours, le premier groupe de freins de roue (60, 62) est actionné au moyen du maître-cylindre (21) et le deuxième groupe de freins de roue (64, 66) est actionné au moyen du dispositif de fourniture de pression (22).

11. Procédé selon les revendications 7 à 10, **caractérisé en ce qu'**en cas de détection d'une panne d'au moins une vanne du système de freinage, le système de freinage est utilisé dans le mode de fonctionnement de secours.

12. Procédé selon les revendications 7 à 11, **caractérisé en ce que** les freins de roue (60, 62, 64, 66) sont reliés de manière séparable au réservoir de fluide sous pression (18) respectivement par le biais d'une vanne de sortie (190, 192, 194, 196), en particulier par l'intermédiaire d'une conduite de retour commune, et dans le mode de fonctionnement de secours, les vannes de sortie sont maintenues fermées.
